# EUROPEAN PATENT APPLICATION

(11) **EP 2 846 172 A1**
(43) Date of publication of application: **11.03.2015**
(21) Application number: 13183538.1
(22) Date of filing: 09.09.2013
(51) Int. Cl.: G01S 13/93, G08G 1/005, G08G 1/16

(54) **Warning system and method**

(71) Applicant: NXP B.V., 5656 AG Eindhoven (NL)
(72) Inventor: Zivkovic, Zoran, 5656 AG Eindhoven (NL); Al-Kadi, Ghiath, 5656 AG Eindhoven (NL)
(74) Representative: Schouten, Marcus Maria

(57) **Abstract**

The invention provides a warning system which is at least partly portable. For objects within range, their distance and relative speed of approach is derived. The speed and direction of movement of the user carrying the device is also determined. These information sources enable an alarm to be triggered based on a determination that collision between the user and the sensed objected is likely.

## Description

### Field of the invention

This invention relates to warning systems, for example for alerting users of the system to the risk of an impact with another object.

### Background of the invention

Pedestrians and cyclists are exposed to significant risk when walking/cycling on pavements and roads, especially in dark conditions. Visually impaired people are even more exposed to these risks, as they are less able to perceive imminent danger and take avoiding action.

Systems for preventing impact between vehicles are well known. One commonly used example is proximity sensors for parking assistance. Parking presents limited danger to a driver, and parking assist technology serves principally as an aid to make parking easier. Thus, while such technology enables collision to be avoided during parking, it does not aim to protect pedestrians, and is not a device for use by pedestrians.

There remains a need for a system which is suitable for a pedestrian or cyclist, and which can provide a warning of the risk of a possible imminent impact with another object, such as a vehicle.

### Summary of the invention

The invention is defined by the claims.

An aspect of the invention provides a warning system, comprising:
a portable warning device for wearing or carrying by a user, the device comprising:
   a proximity sensor arrangement for sensing objects within range of the proximity sensor arrangement and for detecting their distance and direction from the device and relative speed of approach to the device; and
   a motion sensor arrangement for sensing a speed and direction of movement of the device; and
   an alarm,
   wherein the system further comprises a processor, which is adapted to:
      process information received from the proximity sensor arrangement concerning sensed objects and from the motion sensor arrangement;
      perform a filtering operation on the sensed objects to ignore sensed objects based on a determination that collision between the user and the sensed objected is not expected; and
      generate a signal to trigger the alarm in respect of the other sensed objects.

This system combines a proximity sensor, for detecting nearby objects and their speed towards the user, with a motion sensor, for determining the path of the user. The information from these sensors can be used to perform a filtering function so that objects which present a danger are identified and used to provide an alarm signal. This enables reliable detection of danger and clear signalling to a user.

For example, the direction in which the user is facing and their speed of motion can be combined with the evolution over time of a detected distance and (relative) approach speed of an object. By taking into account the speed of the user, an approaching object can be regarded as not being a likely cause of impact if the approach is the result of the movement of the device (i.e. the remote object is stationary). Thus, the filtering can ignore stationary objects. It can also ignore objects moving at a speed below a threshold. A single speed analysis can be used to detect stationery objects.

By tracking the trajectory of the detected object based on multiple sensor samples, the likelihood of an impact can be determined.

The invention relates to devices of a size and weight that they can be carried with a person who is travelling on foot. These will be referred to as "portable". For example, the device may be hand held, pocket size, of a size and weight which might be transported in a bag carried by the user or strapped on to the user. Alternatively, the device can be incorporable into clothing, clothing accessories, footwear or jewellery that a user wears.

The detected objects can include (without limitation) stationary objects, moving objects such as motor vehicles and persons in motion passing through the transient defined proximity of the user as the device travels with the user.

The filtering operation avoids troubling the user with repeated false alarms when in a busy area where multiple objects might pass through the sensing range without presenting a real danger of collision. The invention thus provides a practical device which can conveniently be used by a pedestrian or cyclist in motion in a busy street to provide the pedestrian or cyclist with meaningful warnings of potentially harmful collisions with stationary or other moving objects arising.

The range of the proximity sensor arrangement is typically a radius around the proximity sensor. For example, the defined proximity might be between 0 and 5 metres, or 0 and 3 metres, or 0 and 2 metres.

Instead of warning of potential collision with a large object, another application for the device is for personal safety alarms, for alerting the user and other passers-by to a threat of, or actual, personal attack on the user. Existing personal alarm devices rely on positive mechanical activation by the user when aware of a threat, or already under attack. If an audible alarm is used, the sound may be sufficient to deter the attacker from proceeding. However, some harm may have already been caused to the user by that point.

The device of the invention can be used to detect a sudden intrusion into the defined proximity which presents a threat of contact with the device (and the user). For example, if a street criminal approaches suddenly from behind or out of seclusion in a poorly lit area at speed, the device can alert the user and any passers-by by signalling an alarm before the street criminal makes contact with his intended victim. This earlier warning may be sufficient to deter the street criminal from continuing with the intended crime or enable a passer-by to intervene in sufficient time to apprehend the street criminal.

Other practical uses of the device of the invention include assisting the visually and/or hearing impaired to safely navigate themselves through a busy and changing environment.

In a preferred implementation, the processor is also part of the portable warning device. This provides a stand-alone product.

The motion sensor can be adapted to determine a direction in which the user is facing. This can be achieved by arranging the device so that it has to be carried or worn in a certain way - for example at the front of a cycle helmet or at the back of an item of clothing. This provides additional information, so that for example different thresholds can be set for detected threats in the field of view of the user than for detected threats outside the field of view of the user. Alternatively, the system can assume that the user is facing the direction in which the user is determined to be moving, and this then enables the sensor to be mounted in any orientation.

The filtering operation can comprise ignoring sensed objects that are determined to be stationary. This can be determined very simply from a comparison of the absolute velocity of the user and the relative speed of the user towards the object.

The proximity sensor arrangement can comprise a radar sensor, an ultrasound sensor, a microphone, a passive/active infra-red sensor or a visible light sensor. In preferred arrangements, one or more radar sensors are used, and these can be supplemented with additional sensors.

A radar proximity sensor can measure the radial component (i.e. that component directly towards the sensor) of the speed using the Doppler effect very accurately. Even comparing only the radial component can provide an indication of if the object is on a dangerous trajectory.

The motion sensor arrangement preferably comprises one or more of:
an accelerometer;
a compass; and
a gyroscope.

The portable warning device components can be integrated into a portable audio player or mobile telephone, so that they are part of a device already generally carried by the user. The alarm can be or include an audible alarm, so that the user does not need to inspect the device or concentrate on the device to be aware of the warning. Some or all of the components can for example be integrated into clothing, with different parts communication for example using Bluetooth.

The invention also provides a method for alerting a user of a system to a threat of collision with an object using a warning system having a portable warning device for wearing or carrying by a user, the method comprising:
using a proximity sensor arrangement of the device to sense objects within range of the proximity sensor arrangement and to detect their distance and direction from the device and relative speed of approach to the device;
sensing a speed and direction of movement of the device;
processing the distance, relative speed, speed and direction information thereby to implement a filtering operation to ignore sensed objects based on a determination that collision between the user and the sensed objected is not expected and to generate an alarm in respect of the other sensed objects.

This enables a warning to be provided to a pedestrian or cyclist and can thus improve safety.

The processing can comprise:
from the speed and direction of movement of the device, determining a component of that speed in the direction of a sensed object; and
determining that a sensed object is a potential threat based on the difference between the speed component and the detected relative speed of approach of the sensed object to the device.

This potential threat analysis can for example ignore stationary objects (such as buildings), if they are not a perceived threat. It may be that stationary objects are a threat, for example for systems for the partially sighted. In this case, a different distance threshold may be applied to those objects, so that approaching objects represent one danger and very close stationary objects represent another danger.

When a sensed object is determined to be a potential threat, the method can comprise performing a trajectory analysis to determine an expected path of the object and thereby determine if collision is expected. The trajectory analysis can be based on at least two sets of proximity sensor data at sequential time instants.

### Brief description of the drawings

Embodiments of the invention are described in more detail and by way of non-limiting examples with reference to the accompanying drawings, wherein;
Figure 1 illustrates in schematic form the operation of a device, method and system in accordance with embodiments of the invention.
Figure 2 illustrates an architectural overview of a system in accordance with an embodiment of the invention.
Figure 3 illustrates schematically how an embodiment of a component of an embodiment of the invention might assess the probability of a detected object presenting a threat of collision; and
Figure 4 shows how multiple measurements can enable increased information to be derived about the movement of remote objects.

It should be understood that the Figures are merely schematic and are not drawn to scale. It should also be understood that the same reference numerals are used throughout the Figures to indicate the same or similar parts.

### Detailed description

The invention provides a warning system which includes at least a portable device for carrying or wearing by a user. For objects within range, their distance and relative speed of approach is derived. The speed and direction of movement of the user carrying the device is also determined. These information sources enable an alarm to be triggered based on a determination that collision between the user and the sensed objected is likely.

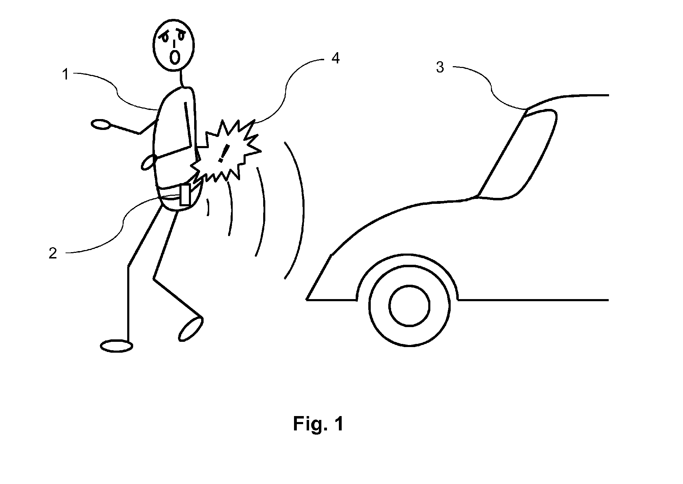

Figure 1 shows an embodiment of the invention being used by a pedestrian 1, and comprises a portable device 2 which incorporates a sensor arrangement (not shown) and an alarm 4 which alerts the pedestrian 1 to the presence of a motor vehicle 3 within a range of the device 2 worn by the pedestrian 1 and additionally presenting a threat of collision.

The device 2 includes two types of sensor.

A first type is used to monitor the movement of the user, and in particular to determine the direction and speed of travel. This information can be derived from accelerometers and/or gyroscopes and/or compasses. The data from these sensors enables the orientation of the device and any movement of the device to be monitored.

A second type is used to monitor the environment, and in particular the proximity and direction to remote objects.

Various sensors can be used to monitor the environment around the user. A microwave (radar) based system is most suitable since it can be used to measure in all directions. This makes the system practical since there are no special requirements for placing the device and the user can freely wear it. Furthermore, the radar signal is reflected from metal objects and not much from human body. Therefore it is very difficult to detect pedestrians by using a car-mounted radar system but much simpler for a radar from the pedestrian side to detect the cars.

Other sensors for monitoring the environment could also be used or added to radar, for example ultra sound, sound (microphones), passive/active infrared or visible light sensors. These sensors need line of sight to be able to monitor the environment and would require special placement. For example, if interested only in objects from behind, the sensors should be placed such to look behind the user. Additional and different types of sensor can be used to increase the sensitivity in a given direction.

In addition to determining the position and distance to remote objects, their speed of movement is also derived.

Since the sensors are all mounted on the user, only relative speed information can be derived. In a most simple implementation, the relative speed can be determined based on Doppler shift calculations on the signals from the radar (or other) proximity sensor. This provides an indication of the speed of the movement in the direction towards the sensor. Thus, the speed determination based on a Doppler shift does not provide a speed vector, but rather provides an indication of the relative speed of the remote object speed in the direction of the user.

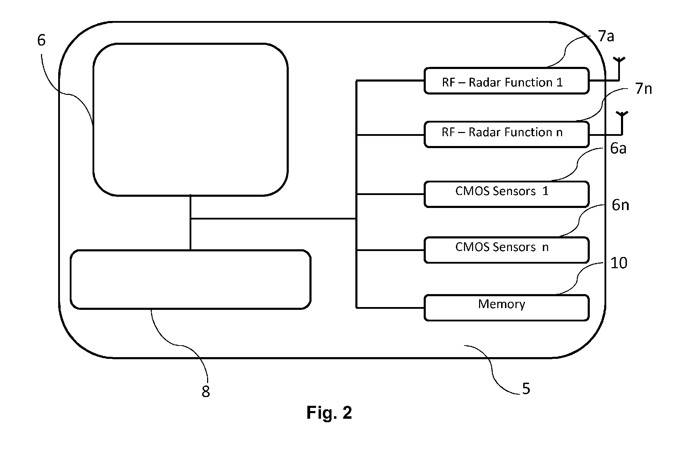

Figure 2 shows the system architecture 5 for one practical embodiment of the invention. A main CPU 6 provides the control functions and implements the high level algorithmic functions and user defined functions.

A set of sensors 6a,..., 6n are shown of the first type, for monitoring the movement of the device itself. These can for example comprise a gyroscope, accelerometer and a compass. In known manner, position can be tracked by integration of directional acceleration values. These can be integrated circuit sensors.

A set of sensors 7a, ..., 7n are shown of the second type, for monitoring the movement of the remote objects. These can for example comprise multiple radar sensors.

The device comprises a signal processor 8 for processing the various sensor signals. A so-called sensor fusion DSP is a known processor for combining different types of sensor signal for performing data fusion on the sensor data acquired from the multiple sensors.

Figure 2 shows a stand-alone implementation, but some of the processing (such as carried out by the main processor 6) could be provided by a remote device.

The information from the various sensors is combined in order to detect potentially dangerous objects and situations, e.g. a moving car getting closer at a high speed, and remove false alarms.

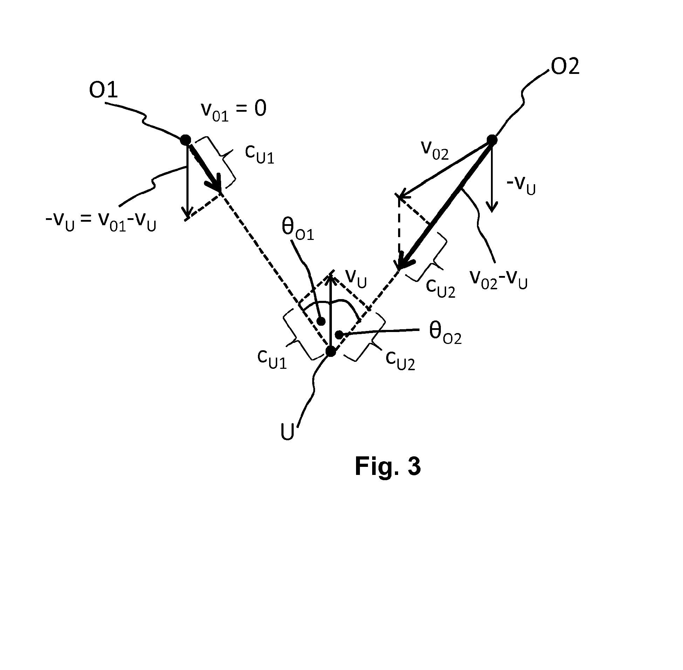

Figure 3 is used to explain how the sensor signals can be processed. It shows a user U advancing in a direction and a speed as indicated by the velocity vector v_{U}. In Figure 3, all arrows with "v" designations relate to velocity vectors.

A first object O1 is stationary, hence v_{O1} = 0. The relative velocity of the user with respect to this object is v_{O1-}v_{U}, which is equal to -v_{U} as shown. The first object is in a direction represented by angle θ_{O1}.

The approach or retreat speed of the object O1 is measured by the radar system (part of the proximity sensing arrangement) for example based on Doppler shift measurement. This speed information provides a measure of the component of the relative object velocity in the direction of the user, i.e. along the dotted radial line shown. The proximity sensing includes also distance measurement to the object as well direction measurement.

The user velocity gives rise to a component C_{U1} in the direction of the object O1. Thus, even though the object O1 is stationary, it does have a relative speed of advance towards the moving user, and it is this speed that is measured. The measured component is equal to C_{U1} and results entirely from the movement of the user.

A second object O2 is moving along the path shown by the velocity vector v_{O2}. This is chosen as an example where there is a collision course with the object. The relative velocity of the user with respect to this object is v_{O2-}v_{U}, which is shown. The second object is in a direction represented by angle θ_{O2}.

The user velocity gives rise to a component C_{U2} in the direction of the object.

The approach or retreat speed of the object O2 is also measured by the radar system again based on Doppler shift measurement. This speed information provides a measure of the component of the relative object velocity in the direction of the user, i.e. along the dotted radial line shown.

This speed includes a part C_{U2} which is the result of the user movement, but there is an additional part which derives from the object movement.

The detection procedure thus comprises:
(i) Using the first type of sensor data (accelerometers/gyroscope/compass) to estimate the orientation of the device and movement of the device. This gives the velocity vector v_{U}.
(ii) Using the second type of sensor data (radar) to detect close-by objects and their approach or retreat speeds. This provides identification of objects, and the speed values. It also provides directional information. Large metal objects, such as cars, would usually be give large reflected signals and are easy to detect.
(iii) The collected data is then combined to remove the false alarms:
   Assuming that the portable device is moving with the user, the estimated motion vector v_{U} of the device is assumed to match the motion of the user. From the user velocity vector v_{U} and the directional information from the radar system, the radial speed components C_{U1} and C_{U2} can be derived.

If the radar measured radial speed is close to the speed resulting from the user velocity vector v_{U}, the object can be designated as static and not dangerous. This is the case for object O1.

The radar measured radial speed can be close to the speed resulting from the user because the object is travelling on a tangential path (with respect to the radial path). However, this path is not a collision path, even if the object is moving very fast in this tangential direction.

Objects can be designated to be potentially dangerous objects when they have a radial speed larger than a threshold in the direction towards the user, after removing the component (C_{U1} or C_{U2}) introduced by the user motion. In this way static objects and many moving objects not on collision course can be removed from further consideration.

This provides a first coarse filtering step. All objects with a relative movement perpendicularly to the user or with a component away from the user can be eliminated from consideration, as well as all objects with a component of speed in the direction of the user below the set threshold.

This filtering step does not however provide accurate analysis of the trajectories of the remote objects and therefore does not enable accurate assessment of the likelihood of collision. A further fine filtering step is needed for this purpose.
(iv) After the first filtering step described above, the distance and speed information for the potentially dangerous objects needs to be measured again. From a combination of the first and the second measurements, other components of their speed (i.e. not only in the direction facing the user) are estimated and the corresponding acceleration.

This information for example enables the velocity vector v_{O2} to be determined. This is then used to predict if the object is indeed on collision course with the user.

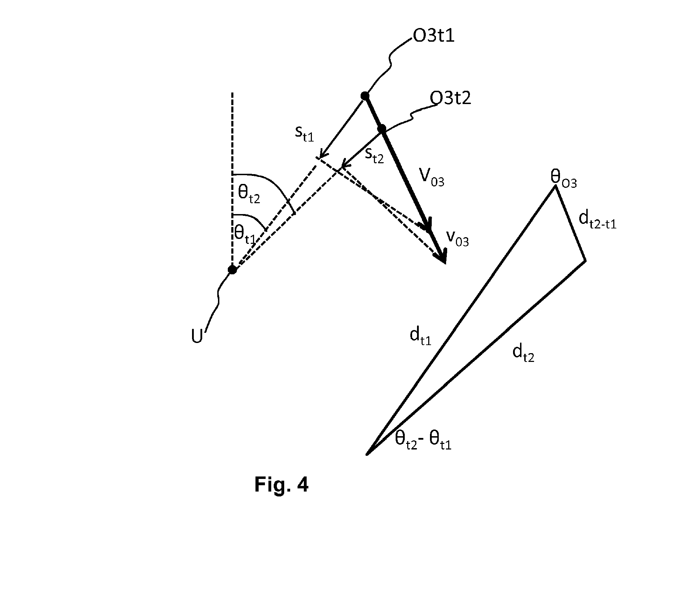

Figure 4 shows in simplified form how two successive measurements enable the object velocity to be derived. In Figure 4 the user velocity is taken to be zero to simplify the drawing.

The object O3 has a component of its velocity v₀₃ towards the user but is it not on a collision course. The relative position of object O3 is shown at two time intervals t1 and t2. The distance and angle measurement at these two times uniquely define a triangle (as shown in Figure 4) from which the object direction (as can be derived from θ_{O3}) and its speed (as the length of the side dₜ₂₋ₜ₁ combined with the time between successive measurements) can be derived.

Thus, two sets of sensor measurements can be used to provide an indication of potential threats followed by a risk assessment on those potential threats.

By continuously monitoring, objects can be tracked as they come in and out of view, and their trajectories can be monitored over time, as the objects may of course accelerate, decelerate and change direction.

In addition to the local sensors, other information sources can be used to further tune the reliability of detecting dangerous situations. For example, the GPS position of the user and the corresponding street map can give additional info about the possible traffic situation.

The system can also be design to communicate with vehicles. Vehicles could broadcast their own GPS position to be able to better locate them in combination with the personal radar system.

It is also possible to send the warning messages to a car which has been identified as a threat of collision. This message could include some information from the detection system at the vulnerable user side. This would make detection of the vulnerable users easier at the car side and also allow some reaction by the car.

If potential danger is detected the user is warned using the alarm system. Warning using a portable device display is not practical since the user is not looking at it most of the time. The preferred warning mechanisms are directional sound or directional tactile feedback. The warning reaction time is similar to the aids for the blind, and some training may be needed for users to learn to use it as "the sixth sense".

Some practical options for the feedback are:
Audio feedback: simple sound emitted by the device or an attached audio system can be used. For example if the user is wearing headphones, the warning sound could be mixed with the current song that the user is listening to.

Directional audio feedback: If there is stereo audio system, e.g. the user is wearing headphones, the system can be used also to generate stereo sound such that the sound direction corresponds to the direction of the approaching danger.

Directional filtered audio feedback: If a microphone is included in the system, instead of only generating a warning sound, the actual sound of the dangerous object can be enhanced. The sound of the dangerous object can give the user directly some additional information about the type of the danger. For example the sound of approaching car can be mixed into the current audio signal (e.g. the song that the user is listening to).

Tactile: previous methods can be extended using some vibrations for example.

Glasses visual warning: If the user is wearing glasses, visual warning system can be included into the glasses in various ways.

As explained above, a first filtering step involves applying a threshold to the net speed component of an object (i.e. after subtracting the contribution from the user's movement) in the direction of the user. This threshold may be zero, so that all objects with any component of their speed toward the user is perceived as a possible danger. The threshold may be set at any speed level to provide a narrower filtering operation. Furthermore, the threshold may be user set, so that they can configure the way the device works. For example different configurations may be appropriate for walking and cycling.

The second filtering is based on trajectory analysis. Again, a threshold can be set which relates to the determined probability of a collision. This threshold can also be user configured.

The threshold can for example be related to the determined closest distance between the two objects, based on the trajectory analysis carried out. An alarm can be triggered based on this closest distance. The larger the distance, the more error is allowed in the calculations and approximations. An alternative is to apply margins to the measured user speed and direction and the determined object trajectory. If the trajectory analysis for any set of values within these margins predicts a collision, the alarm can be triggered. Thus, there are different ways to process the various information gathered in order to predict when a collision is likely, and different thresholds values can be manipulated to make the alarm more or less sensitive.

Some situations may even perceive stationery objects as a threat and others may not, and again the user may be able to configure suitable settings.

The device can broadcast its measurements to the objects in the vicinity, for example if they have similar collision avoidance features.

As explained above, the device needs to determine the relative direction to the objects being detected. However, this does not need to be an absolute indication of direction as could be given by a compass. Only a relative indication of direction (for example with reference to a forward facing orientation of the device) is needed to implement the method. Thus, a compass is not essential, but some frame of reference is needed.

The example above is based on radar proximity sensing, with Doppler shift analysis to determine speed. Ultrasound could also be used for the Doppler effect, but a clear line of sight is needed. If this clear line of sight is ensured, visible light or a thermal camera could complement the radar or ultrasound system, since they will typically be able to derive the tangential component of the speed (and position also) more effectively. This can assist in providing the further calculations of the collision course reliably and quickly.

The examples of the invention above makes use of a processor, which performs the function of a system controller. The system controller can be implemented in numerous ways, with software and/or hardware, to perform the various functions required. A processor is only one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform at the required functions. Various storage media may be fixed within a processor or controller or may be transportable, such that the one or more programs stored thereon can be loaded into a processor or controller.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A warning system, comprising:
a portable warning device (2) for wearing or carrying by a user, the device comprising:
a proximity sensor arrangement (7a..7n) for sensing objects within range of the proximity sensor arrangement and for detecting their distance and direction from the device and relative speed of approach to the device; and
a motion sensor arrangement (6a..6n) for sensing a speed and direction of movement of the device; and
an alarm (4),
wherein the system further comprising a processor (6) which is adapted to:
process information received from the proximity sensor arrangement concerning sensed objects and from the motion sensor arrangement;
perform a filtering operation on the sensed objects to ignore sensed objects based on a determination that collision between the user and the sensed object is not expected; and
generate a signal to trigger the alarm in respect of the other sensed objects.

2. A system as claimed in claim 1, wherein the processor (6) is also part of the portable warning device.

3. A system as claimed in claim 1 or 2, wherein the motion sensor arrangement (6a..6n) is adapted to determine a direction in which the user is facing.

4. A system as claimed in any preceding claim, wherein the filtering operation comprises ignoring sensed objects that are determined to be stationary.

5. A system as claimed in any preceding claim, wherein the proximity sensor arrangement (7a..7n) comprises a radar sensor, an ultrasound sensor, a microphone, a passive/active infra-red sensor or a visible light sensor.

6. A system as claimed in any preceding claim, wherein the proximity sensor arrangement (7a..7n) comprises one or more radar systems.

7. A system as claimed in any preceding claim, wherein the motion sensor arrangement (6a..6n) comprises one or more of:
an accelerometer;
a compass; and
a gyroscope.

8. A system as claimed in any preceding claim, wherein the portable warning device components are integrated into a portable audio player or mobile telephone.

9. A system as claimed in any preceding claim, wherein the alarm (4) is or includes an audible alarm.

10. A method for alerting a user of a system to a threat of collision with an object using a warning system having a portable warning device (2) for wearing or carrying by a user, the method comprising:
using a proximity sensor arrangement (7a..7n) of the device to sense objects within range of the proximity sensor arrangement (7a..7n) and to detect their distance and direction from the device and relative speed of approach to the device;
sensing a speed and direction of movement of the device;
processing the distance, relative speed, speed and direction information thereby to implement a filtering operation to ignore sensed objects based on a determination that collision between the user and the sensed objected is not expected and to generate an alarm in respect of the other sensed objects.

11. A method as claimed in claim 10, wherein the processing comprises:
from the speed and direction of movement of the device, determining a component of that the speed in the direction of a sensed object;
determining that sensed object is a potential threat based on the difference between the speed component and the detected relative speed of approach of the sensed object to the device.

12. A method as claimed in claim 11, further comprising, for a sensed object which is determined to be a potential threat, performing a trajectory analysis to determine an expected path of the object and thereby determine if collision is expected.

13. A method as claimed in claim 12, wherein the trajectory analysis is based on at least two sets of proximity sensor data at sequential time instants.

14. A method as claimed in any one of claims 10 to 13, wherein the alarm is or includes an audible alarm.
